# EUROPEAN PATENT SPECIFICATION

(11) **EP 3 109 179 B1**
(45) Date of publication and mention of the grant of the patent: **12.06.2019**
(21) Application number: 15173978.6
(22) Date of filing: 26.06.2015
(51) Int. Cl.: B65D 30/20, B65D 33/00, B65D 88/16, B65F 1/00, B65D 75/00

(54) **WELDED BAG, ROLL, USE AND METHOD OF MANUFACTURING**
GESCHWEISSTER BEUTEL, ROLLE, VERWENDUNG UND HERSTELLUNGSMETHODE
SAC SOUDÉ, ROULEAU, UTILISATION ET PROCÉDÉ DE FABRICATION

(43) Date of publication of application: 28.12.2016
(73) Proprietor: Trioplast Nyborg A/S, 5800 Nyborg (DK)
(72) Inventor: CHRISTENSEN, Dan, 5550 Langeskov (DK); KAAG, Erik, 5000 Odense C (DK); MARCHER, Bjørn, 2670 Greve (DK)
(74) Representative: AWA Sweden AB

(56) References cited:
- WO-A1-2014/096270
- FR-A- 1 306 505
- FR-A1- 2 672 033
- GB-A- 2 488 544
- JP-A- H11 171 212
- US-A- 3 739 977
- US-A- 5 421 804
- US-A- 5 772 332

## Description

### Field of the Invention

The present invention relates to flexible containers for collection and transport of goods, particularly for collecting empty cans or bottles for recycling.

### Background

Vast volumes of goods are collected every day and transported for processing and recycling or reuse. A large portion of the recyclable goods are collected at designated recycling points or facilities. Examples include collection of garbage and used textiles, paper, plastics, metal and glass. The goods are typically collected for transport in various types of containers. Examples include conventional plastic bags or sacks, woven container bags ("big-bags") and cardboard boxes or other rigid bins or containers, optionally provided with a plastic liner (bin or container liner).

One important application is collection of empty cans or plastic bottles for recycling. Cans and bottles are typically collected in automated collection machines placed at, e.g., supermarkets or shopping centers. The machine compresses the cans or bottles to reduce the volume for storage and transport and collects the compressed cans or bottles in a designated container. Some applications, including collection of cans or bottles, are more demanding on the type of container since they will always involve an amount of residual liquids. Prior art solutions for collection of cans or bottles include cardboard boxes or other rigid bins or containers, optionally provided with a plastic liner (bin or container liner). Rigid bins or containers take up a lot of space and cannot easily be stored away. Bin or container liners are typically made of thin plastic film, which will not retain their shape when removed from the bin or container, making stacking, transport and storage awkward. Also cardboard also have limitations. Besides the obvious drawback of being sensitive to moisture and liquids, cardboard boxes also lead to a significant amount of cardboard waste which must be collected, stored and disposed of.

FR 2672033 A1, US 3739977 A and WO 2014/096270 A1 disclose bags which are part of the prior art.

In view thereof, there exists a need for improved containers for collection and transport of goods, particularly for collecting empty cans or bottles for recycling.

### Summary of the Invention

It is an object of the present invention to address at least some of the deficiencies associated with prior art containers.

The principal object of the present invention is to provide an improved flexible plastic container which can be used by itself without the support of a cardboard box or other rigid bin or container.

Another object is to provide a flexible plastic container which can be closed so as to prevent contents or odors from exiting the closed container as well as to prevent insects from entering the closed container.

A further object is to provide flexible plastic containers which can be conveniently stacked on top of each other when filled, in order to minimize area required for storage.

Another object is to provide a flexible plastic container which can be produced in high volumes at low cost in a continuous and automated production process.

These and other objects are achieved by the present invention as described with reference to the various aspects and embodiments described herein.

According to a first aspect illustrated herein, there is provided a welded plastic container bag for collection and transport of goods,
wherein said bag in an upright deployed state has a substantially quadrangular horizontal cross section with a substantially quadrangular base and four side walls, and
wherein adjacent side walls are connected by a corner weld extending in a direction substantially perpendicular to the base, from the corners of the base substantially up to a predetermined fill level of the bag.

The welded plastic container bag of the invention is primarily intended for use in collecting and transporting relatively light bulk goods, typically goods having average densities in the range of about 50 kg/m³ to about 400 kg/m³ for larger bags (>1 m³), or about 50 kg/m³ to about 600 kg/m³ for smaller bags bags (<1 m³), such as garbage, textiles, and paper, plastics, metal and glass containers. Examples of applications can be for collection and recycling of plastic bottles, containers and cans from cosmetics, beverages, soft drinks, household chemicals and detergents, cardboard waste, used textiles and clothing, disposable protective clothing, food waste, plastic film waste, plastic hangers, metal cans and paper waste. It could also be for bulk materials like wooden chips, wood pellets, horticulture products/sphagnum, flocculated insulation material, expanded/foamed polystyrene chips, or food ingredients like pasta, rice, marshmallows or popcorn. It may also be used for disposal of goods like weed plants and other horticulture products. One preferred application for the bags is collection and transport of empty cans or plastic bottles for recycling. The weight of the filled bags will typically be in the range of 25-300 kg or 50-200 kg depending on the volume of the bag.

The corner welds have the dual purpose of providing the bag with marked corners and providing the bag with sufficient rigidity to allow it to stand by itself, without additional mechanical support. Optionally, a temporary supporting structure may be used when filling the bag. Such a temporary supporting structure may for example be useful for defining the box shape of the bag especially when the bag is being filled with heavy objects. The supporting structure may for example be a frame formed of wood or metal rods, or corrugated cardboard. The supporting structure is preferably removed after closing the filled bag and the filled bag is capable of standing by itself, without additional mechanical support.

The bag can advantageously be dimensioned in pallet or half-pallet size to fit on a suitable pallet, such as a euro-pallet (120x80 cm). Typical dimensions of the bag may thus be for example 120x80 cm with a maximum filling level height of about 70-125 cm.

The base and side walls of the bag are made of welded plastic film. This allows the bag to be made substantially liquid tight, which is beneficial in many applications.

According to the invention, the side walls extend substantially above the predetermined fill level of the bag to form top portion useful for closing the bag. The overall height of the bag will typically be significantly greater than the predetermined fill level, for example about 180 cm, to allow easy closure of the bag when filled. The top portion also has the additional benefit, when counter-folded downwards from the predetermined fill level of the bag of providing added rigidity and support to the bag in the upright deployed state, allowing the bag to stand on its own without additional mechanical support.

According to some embodiments, the top of the bag is substantially flat when closed using the top portion. Accordingly, when the bag is filled, it can be sealed at the top to form a substantially rectangular box-shaped package. Several such box-shaped packages can be conveniently stacked on top of each other without risk of toppling over. This is of course useful in order to minimize area required for storage and transport of the filled bags.

According to some embodiments, the bag can be made substantially air tight when closed using the top portion. This is preferred since it serves to prevent odors from exiting the closed container as well as to prevent insects from entering or leaving the closed container.

The bag should be able to replace conventional containers or bins for collecting goods for recycling. Accordingly the bag in an upright deployed state defines an internal volume in the range of 0.1-3 m³ up to the predetermined fill level. The bag in the upright deployed state is preferably liquid tight and substantially air tight below the predetermined fill level.

The inventive bag is suitable for production in high volumes at low cost in a continuous and automated production process.

According to some embodiments, the substantially quadrangular base and four side walls are formed out of a single piece of plastic film.

According to the invention, the substantially quadrangular base and four side walls are formed out of a gusset folded tube of plastic film having two opposing gusset folds, each gusset fold comprising two outer fold lines and one inner fold line. According to some embodiments, the base is formed by a bottom weld line sealing the bottom end of the tubular piece of plastic film, and oblique weld lines for providing the base with a substantially quadrangular shape. The front and back side of the gusset folded tube form two opposing side walls of the bag and the two opposing gusset folds form the remaining two opposing side walls.

According to some embodiments, each corner weld is arranged adjacent and substantially parallel to an outer gusset fold line in the tubular piece of plastic film.

According to the invention, each corner weld comprises a weld line, which together with the adjacent gusset fold forms a tubular corner section. The tubular corner sections have been found to be particularly useful for providing the bag with sufficient rigidity to allow it to stand by itself, without additional mechanical support.

It has been identified that the square shape of the bag when filled is better retained near the bottom of the bag, whereas the bag tends to swell and partially lose its square shape at about half the intended fill height. This can reduce the stability of the bag when stacked and also makes handling of the bag more difficult.

According to some embodiments, the bag further comprises one or more support welds arranged between the base and a predetermined fill level of the bag, creating a narrowed horizontal cross section between the base and a predetermined fill level of the bag. The support welds are preferably positioned to help prevent barreling of the bag in a filled state. The support welds may preferably be positioned near the corner welds, connecting two adjacent side walls on the inside of the bag. However, the support welds may also be positioned to connect two portions of the same side wall, on the inside or outside of the bag, to form a narrowing fold which reduces the horizontal cross section of the bag.

According to some embodiments, adjacent side walls are further connected by a support weld arranged between the base and a predetermined fill level of the bag, creating a narrowed substantially quadrangular horizontal cross section between the base and a predetermined fill level of the bag. The support welds help prevent barreling of the bag in a filled state.

The support welds may preferably be positioned inside and substantially parallel to the corner welds, but are shorter than the corner welds so as to create a "waist" on the bag when filled. This "waist" helps the bag retain a more even square cross-section over its entire fill height.

According to some embodiments, the support welds are weld lines extending in a direction substantially parallel to the corner welds. The support weld lines may comprise a continuous or intermittent, linear, arc, vee or zig-zag shaped weld line. In a preferred embodiment, each support weld line comprises a continuous linear weld line. In some embodiments, the support weld lines can be performed as continuous arc, vee or zig-zag shaped welds with the weld end points placed in/on the adjacent corner weld. This way, the welds are not subject to high localized mechanical stress at the end points.

The shape and position of the support welds may be varied depending on, e.g., the material of the bag and the nature of the goods to be contained.

According to some embodiments, the length of the support welds is less than 80 % of the length of the corner welds, preferably less than 60 % of the length of the corner welds, more preferably less than 40 % of the length of the corner welds.

According to some embodiments, the support welds are arranged at a distance from the base of the bag, in an upright deployed state, of between 10 % and 90 %, preferably between 20 % and 80 %, more preferably between 30 % and 70 % of the predetermined fill level of the bag.

According to some embodiments, the support welds reduce the circumference of the bag at half the predetermined fill level of the bag, by 1-20 %, preferably by 3-15 %, more preferably by 5-10 %.

When heavily loaded bags are stacked on top of each other, or otherwise roughly handled or put under sudden pressure, there is a risk of the bag rupturing. This risk increases when the bags are closed so as to be substantially air tight. It has been identified that ruptures will mainly occur in connection with the corner or support welds. By experience welds often are ruptured by a notch effect, i.e. the material right next to the weld is weaker, and gives like a notch rupture when subjected to a sudden mechanical load, especially when the weld is in the weakest direction of the film (Machine Direction in a blown film). Ruptures in the bag can result in undesired leakage of material, e.g. bottles or liquid residues or odor, from the bag. To solve this problem, it has been found that the bag can be provided with some weaker bonded welds, configured to break in a controlled fashion when put under stress, resulting in a slight increase of the internal volume of the bag to relieve the pressure. These weaker bonded welds may also be referred to as sacrificial welds. The sacrificial welds are designed to break without causing ruptures on the bag, which could cause leakage. The sacrificial welds may be accomplished, e.g., by welding at lower temperature, pressure or welding time. It is contemplated that the same sacrificial effect could also be achieved using an adhesive (e.g. hot melt adhesive), velcro or double-adhesive tape inside the bag.

The sacrificial welds can preferably be the support welds described above, introduced to reduce the cross section to provide a "waist" on the bag when filled. I.e., the support welds are intentionally made weaker, in order to break in a controlled fashion under strain, thereby reducing stress on the corner welds and preventing the bag from rupture.

Thus, according to some embodiments the support welds comprise a significantly weaker bond than the corner welds. The support welds may preferably be configured to break without puncturing the side walls of the bag.

The plastic container bag is preferably made of thermoplastics. Thermoplastics are preferred for use in the invention since they can be processed using suitable hot melt processing methods, such as extrusion, film blowing, welding, etc. The thermoplastic is preferably a polyolefin, more preferably polyethylene or polypropylene, and most preferably polyethylene. According to some embodiments, the plastic film comprises high density polyethylene (HDPE) or polypropylene (PP).

The plastic container bag is welded. Accordingly, the bag should be made of made of a plastic film capable of being welded, i.e. a weldable plastic film. This means in the present context that the surfaces of the plastic film are capable of being joined to each other by melt bonding. The plastic film may thus be a monofilm entirely made of a weldable thermoplastic polymer or a multilayer film wherein at least the outer layers are made of a weldable thermoplastic polymer. Suitable materials and methods for welding of plastic films are well-known to those skilled in the art. Welds can be formed in spots, lines, patterns or over larger surfaces (also referred to as lamination). Welds used in the present invention will typically have a minimum width of at least 3 mm. The length of the welds may typically be several decimeters.

In order for the bag to be able to stand on its own in an empty state, and retain its shape when filled, the plastic film from which the bag is manufactured must have a certain stiffness. According to the invention, the plastic film has sufficient stiffness to allow the bag to stand on its own in an upright deployed state when the top portion is counter-folded downwards from the predetermined fill level of the bag.

According to some embodiments, the plastic film has a thickness in the range of 100-300 µm, preferably 120-250 µm, more preferably 140-200 µm. According to some embodiments, the corner sections of the bag are provided with one or more gripping holes. The gripping holes may preferably be arranged in the corner sections of the bag. The corner sections are an especially suitable position for the gripping holes because they can be perforated without puncturing the walls of the bag, and additionally because they provide stronger material since they inherently comprise a double layer of plastic film.

The welded plastic container bags of the present disclosure can conveniently be provided on rolls. According to other aspects illustrated herein, there is provided a roll of welded plastic container bags, comprising a plurality of welded plastic container bags as described herein with reference to the first previous aspect, each bag connected to the next bag in the roll by a perforation line.

According to other aspects illustrated herein, there is provided the use of a welded plastic container bag as described herein with reference to the first aspect for collection and transport of bulk products. The bags are primarily useful in collecting and transporting relatively light goods, such as garbage, textiles, and paper, plastics, metal and glass containers. "Relatively light goods" as used herein, typically refers to goods having average densities in the range of about 50 kg/m³ to about 400 kg/m³ for larger bags (>1 m³), or about 50 kg/m³ to about 600 kg/m³ for smaller bags bags (<1 m³). The weight of the filled bags will typically be in the range of 25-300 kg or 50-200 kg depending on the volume of the bag. The bags may advantageously be used for collection and transport of recyclable goods. One preferred use of the bags is for collection and transport of empty cans and bottles. The bags are especially well suited for this application since they can be made liquid tight to prevent leakage of residual liquids from the collected goods, and substantially air tight when closed, to prevent odors from exiting the closed container as well as to prevent insects from entering or leaving the closed container.

According to other aspects illustrated herein, there is provided a process for manufacturing a welded plastic container bag, wherein said bag in an upright deployed state has a substantially quadrangular horizontal cross section with a substantially quadrangular base and four side walls, comprising the steps:
a) providing a gusset folded tube of plastic film having two opposing gusset folds, each gusset fold comprising two outer fold lines and one inner fold line, wherein the front and back side of the gusset folded tube form two opposing side walls of the bag and the two opposing gusset folds form the remaining two opposing side walls;
b) forming a bottom weld line sealing one end of said tube, and forming oblique weld lines to provide a base with a substantially quadrangular shape;
c) forming a corner weld adjacent and substantially parallel to each outer gusset fold line, each corner weld connecting two adjacent side walls from the base substantially up to a predetermined fill level of the bag.

In the manufacturing process, the different welds (bottom weld, oblique welds, corner welds) can be formed simultaneously or in any order or sequence.

According to some embodiments, the manufacturing process further comprises the step:
d) forming support welds on the inside of and substantially parallel to each corner weld, each support weld connecting two adjacent side walls at a distance from the base of the bag, in an upright deployed state, of between 10 % and 90 %, preferably between 20 % and 80 %, more preferably between 30 % and 70 % of the predetermined fill level of the bag, said support welds creating a narrowed substantially quadrangular horizontal cross section between the base and a predetermined fill level of the bag.

In the manufacturing process, the different welds (bottom weld, oblique welds, corner welds and support welds) can be formed simultaneously or in any order or sequence.

According to some embodiments of the manufacturing process, the support welds reduce the circumference of the bag at half the predetermined fill level of the bag, by 1-20 %, preferably by 3-15 %, more preferably by 5-10 %.

According to some embodiments of the manufacturing process, the support welds are formed to comprise a significantly weaker bond than the corner welds.

According to some embodiments of the manufacturing process, the support welds are configured to break without puncturing the side walls of the bag.

The above described and other features are exemplified by the following figures and detailed description.

### Brief Description of the Drawings

Referring now to the figures, which are exemplary embodiments, and wherein the like elements are numbered alike:
Figure 1 is a perspective view of an embodiment of the inventive welded plastic container bag, in full pallet size, in a fully deployed state;
Figure 2a shows an embodiment of the inventive welded plastic container bag in a filled deployed state with the top portion folded down;
Figure 2b shows an embodiment of the inventive welded plastic container bag in a filled and closed state;
Figure 2c shows a stack of three welded plastic container bags in a filled and closed state;
Figure 3a shows two welded plastic container bags in half pallet size;
Figure 3b shows four welded plastic container bags in quarter pallet size;
Figure 4 is a perspective view of an embodiment of the inventive welded plastic container bag in a folded state.
Figure 5 is a perspective view of a roll of welded plastic container bags.

### Detailed Description of Preferred Embodiments

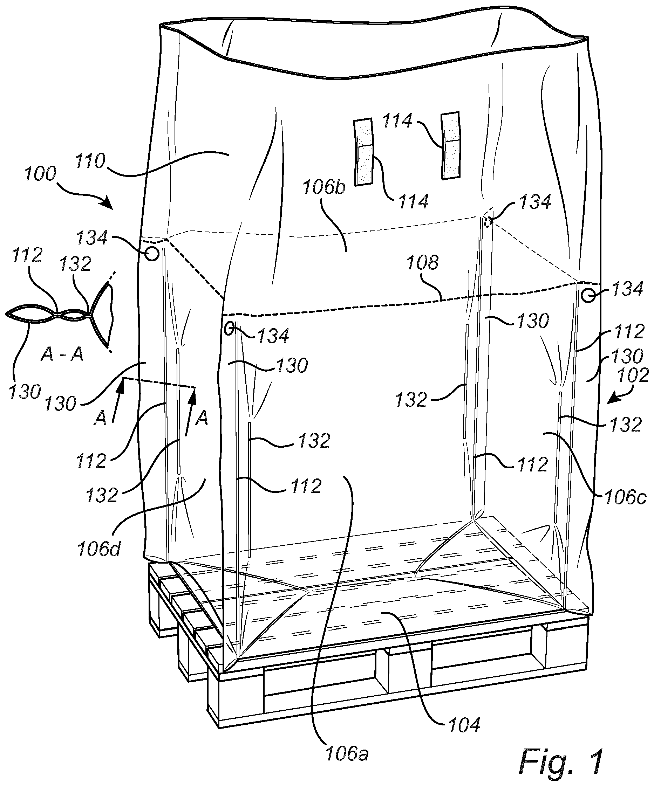

Figure 1, shows an embodiment of the inventive welded plastic container bag 100. The bag is depicted in an upright deployed state. The bag has, in the upright deployed state, a substantially quadrangular horizontal cross section with a substantially quadrangular base and four side walls. "Substantially quadrangular" in the present disclosure should be understood as substantially rectangular or substantially quadratic.

The bag 100 comprises a bottom portion 102, formed by the base 104 and side walls 106 a-d, below a predetermined fill level 108 of the bag. The bottom portion 102 is configured to hold the goods to be contained by the bag. The bag further has a tubular top portion 110, formed by the side walls 106 a-d extending above the predetermined fill level of the bag, useful for closing the bag when filled. The bag in an upright deployed state may define an internal volume in the range of 0.1-3 m³ up to the predetermined fill level.

To allow the bag 100 to stand on its own without support, and to maintain a substantially quadrangular shape of the bag when filled, adjacent side walls are connected by a corner weld 112 extending in a direction substantially perpendicular to the base 104. The corner welds 112 extend substantially from the corners of the quadrangular base substantially up to the predetermined fill level 108 of the bag.

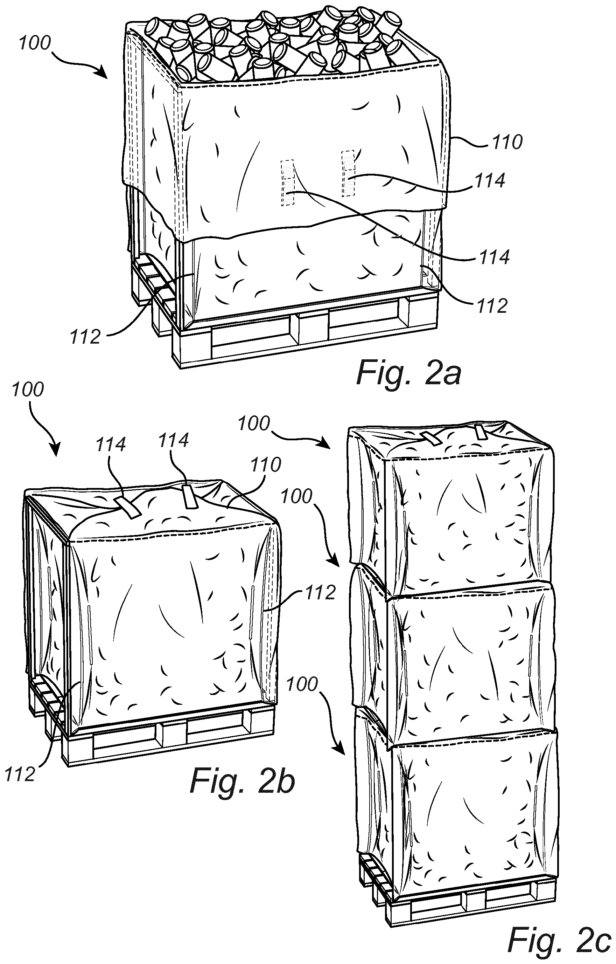

The bottom portion 102 of the bag, together with the plane of the predetermined fill level 108, forms a substantially square or rectangular box shape in a fully deployed state. The top portion 110 of the bag has a sufficient length such that the top of the bag can be made substantially flat when closed using the top portion. The top portion of the bag also has a sufficient length such that the top of the bag can be made substantially air tight, e.g. by flattening the tubular top portion and folding or rolling the flattened when closed using the top portion. The top portion has the additional benefit, when counter-folded downwards from the predetermined fill level of the bag as shown in Figure 2a, of providing added rigidity and support to the bag in the upright deployed state, allowing the bag to stand on its own without additional mechanical support. Optionally, the bag may also be provided with one or more adhesive tags 114 which can be used to secure the top portion of the bag in a closed position.

The bag is typically placed on a pallet prior to filling, and may after filling be transported on the pallet. The pallet could be a standard Euro-pallet of 120x80 cm, industrial pallet of 100x120 cm, or "semi-pallets" of 60x80 cm or quarter pallets of 60x40 cm in size.

The bag may advantageously be scaled to correspond to a suitable pallet size, for example a standard Euro-pallet of 1200x800 mm. The predetermined fill level, i.e. the height as measured from the base, to which the bag is intended to be filled, is typically 70 to 125 cm. It is preferred that the filled bag does not extend outside the perimeter of the pallet. The width dimensions of the bag may therefore preferably be made somewhat shorter than the width dimensions of the pallet to allow some margin, typically in the range of 1-5 %, for swelling or deformation of the bag. For a standard Euro-pallet of 1200x800 mm (circumference 4000 mm), a bag circumference of, e.g., 3900 mm at the base and predetermined fill level may be used.

The bags are typically suitable for goods having average densities in the range of about 50 kg/m³ to about 400 kg/m³ for larger bags (>1 m³), or about 50 kg/m³ to about 600 kg/m³ for smaller bags bags (<1 m³). The weight of the filled bags may typically be in the range of about 25 - 300 kg, for example in the range of about 40 - 60 kg.

Optionally, a temporary supporting structure may be used when filling the bag. Such a temporary supporting structure may for example be useful for defining the box shape of the bag especially when the bag is being filled with heavy objects. The supporting structure may for example be a frame formed of wood or metal rods, or corrugated cardboard. The supporting structure is preferably removed after closing the filled bag and the filled bag is capable of standing by itself, without additional mechanical support.

Figure 2a shows an embodiment of the bag 100 during use in a filled deployed state with the top portion 110 folded down. The bag is supported by an optional temporary supporting structure comprised of a pair of metal frame structures, over which the top portion 110 is folded down. The filled bag can be closed using the top portion 110 of the bag to form a substantially box-shaped package as shown in Figure 2b. The closed bag may preferably be substantially air tight when closed using the top portion. This is preferred since it serves to prevent odors from exiting the closed container as well as to prevent insects from entering the closed container. Two or more filled bags, e.g. three bags or more, in the closed state can conveniently be stacked on top of each other as shown in Figure 2c. The uniform box shape of the bags in the filled state allows for stacking of the bags without risk of the bags sliding off or toppling over.

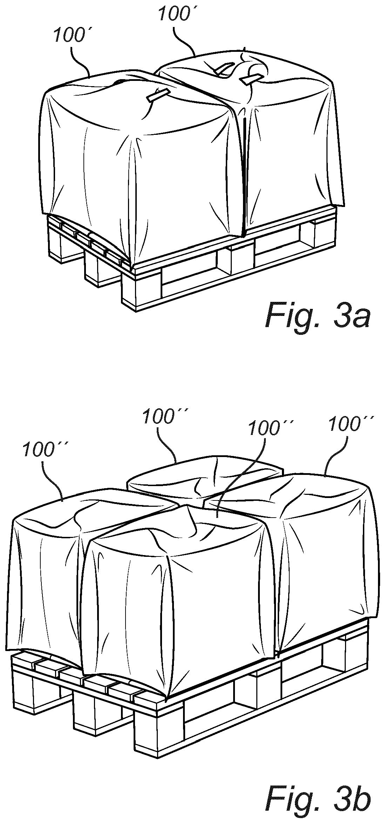

As described above, the size of the bag may advantageously be selected to fit on a suitable pallet. The bags may also be manufactured in other dimensions than single pallet size. The bags may for example be manufactured in half pallet or quarter pallet size, allowing two or four bags, respectively, to be placed on the pallet. Figure 3a shows two welded plastic container bags 100' in half pallet size on a pallet. Figure 3b shows four welded plastic container bags 100" in quarter pallet size on a pallet.

The quadrangular base 104 and side walls 106 a-d can be advantageously be formed out of a single piece of plastic film, although it is understood that a similar structure could also be obtained by joining several different pieces of plastic film. The single piece of plastic film may advantageously be a tubular plastic film produced either by film blowing, as well known in the art, or by welding a planar plastic film to produce a tubular structure. To facilitate production, the tubular plastic film can be a flattened gusset folded tube of plastic film having two opposing gusset folds, each gusset fold comprising two outer fold lines and one inner fold line. The front and back side of the flattened gusset folded tube form two opposing side walls of the bag and two opposing gusset folds form the remaining two opposing side walls.

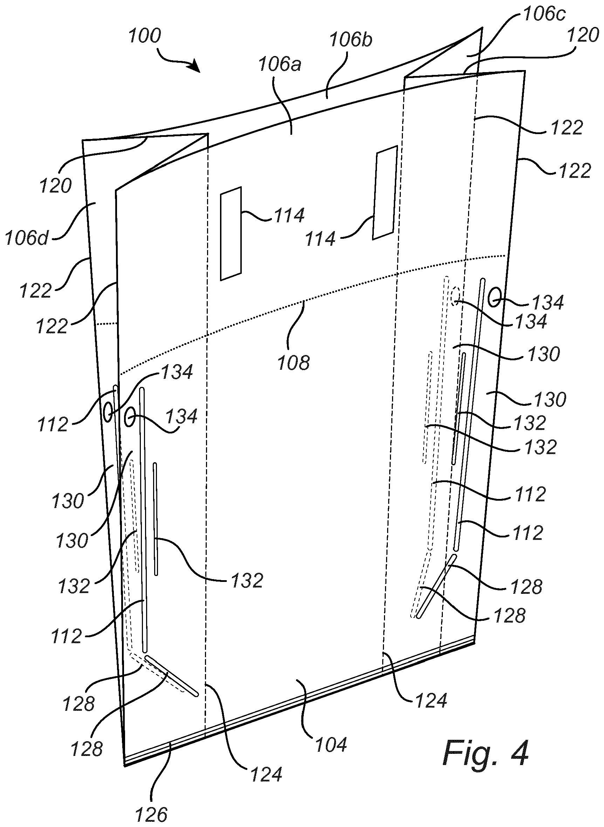

Figure 4 shows the bag 100 in a substantially flattened state. The bag is formed of a gusset folded tube of plastic film having two opposing gusset folds 120, each gusset fold comprising two outer fold lines 122 and one inner fold line 124. The front and back sides of the flattened gusset folded tube form two opposing side walls 106a, 106b of the bag and two opposing gusset folds form the remaining two opposing side walls 106c,106d.

The substantially quadrangular base 104 can be formed by a transverse bottom weld line 126 sealing the bottom end of the gusset folded tubular piece of plastic film, and four oblique weld lines 128 for providing the base with a substantially quadrangular shape. This approach to producing plastic bags having a substantially quadrangular base is well known in the art and does not require any further detailed explanation. When deployed, the front and back side of the gusset folded tube form two opposing side walls 106a, 106b of the bag and the two opposing gusset folds 120 form the remaining two opposing side walls 106c, 106d. The bottom weld line 126 connects and seals all layers of the flattened gusset folded tube at the bottom of the bag. The bottom weld must be strong to keep the bag liquid tight. The four oblique welds lines 128 each connect only two layers, the front or back side 106 of the flattened tube to one of the gusset folds 120. Typically, the end of the weld is approximately at the position where the corner of the base is to be formed. The oblique welds are may preferably be formed at a 45° angle to the bottom weld line 126.

The four corner welds 112 are formed adjacent and substantially parallel to each outer gusset fold line 122. Each corner weld connect two adjacent side walls inside of the bag. The formation of the corner welds 112 result in the formation of a strip-like corner section 130 extending along the outside of the bag at each corner. The corner sections impart stiffness to the bag, which is important for the bag to be able to stand on its own, and to help retain the shape of the bag when filled.

Depending on how the corner weld 112 is configured, the corner section 130 can comprise a laminated double layer of plastic film. If the corner weld comprises a weld line placed at a distance from the adjacent gusset fold, the corner weld will together with the adjacent gusset fold form a tubular corner section.

The distance between the corner welds 112 and the outer gusset folds 122 may typically be in the range of 2 to 10 cm, preferably about 5 cm. The length of the corner welds typically substantially corresponds to the distance between the base 104 and the intended fill level 108 of the bag, but may also be in the range of 5-10 % shorter than this distance.

In addition to the corner welds, the welded plastic container bag may further comprise support welds 132 arranged between the base 104 and a predetermined fill level of the bag 108, creating a narrowed substantially quadrangular horizontal cross section between the base and a predetermined fill level of the bag. In other words, the support welds 132 are arranged to impart a slight waist or hourglass-shape to the bag. In use, the support welds help to prevent barreling of the bag in a filled state. This way, the support welds allow the bag to maintain a more uniform horizontal cross-section over its entire height when filled. The support welds may be placed anywhere around circumference of the bag, however it is preferred to place them close to the corner welds 112. In the Figures, the support welds are positioned near the corner welds, connecting two adjacent side walls on the inside of the bag. However, it is understood that the support welds may also be positioned to connect two portions of the same side wall, on the inside or outside of the bag, to form a narrowing fold which reduces the horizontal cross section of the bag. Particularly, it is envisaged that support welds could be positioned near the inner fold line 124 of each gusset fold, connecting two wall portions on the outside of the side wall formed by the gusset fold (not shown in Figures).

Preferably, like the corner welds, the support welds 132 connect two adjacent side walls inside of the bag. The support welds may preferably be realized in the form of weld lines extending in a direction substantially parallel to the corner welds. The support weld lines can be performed as continuous or intermittent, linear, arc, vee or zig-zag shaped weld lines. In some embodiments, the support weld lines can be performed as continuous arc, vee or zig-zag shaped welds with the weld end points placed in/on the adjacent corner weld. This way, the welds are not subject to high localized mechanical stress at the end points.

The shape and position of the support welds may be selected depending on the relative density of the material to be packed inside. E.g. for loosely packed goods with a low density below 100 kg/m³, a suitable reduction of the circumference can be about 2-4 %, such as about 3 %. For higher densities, a suitable reduction of the circumference can be higher, such as about 5-8 %.

In order to impart a slight waist or hourglass-shape to the bag the support welds 132 are made significantly shorter than the corner welds 112 and vertically and horizontally positioned so as to create a narrowed substantially quadrangular horizontal cross section of the bag.

The length of the support welds 132 may for example be less than 80 % of the length of the corner welds, preferably less than 60 % of the length of the corner welds, more preferably less than 40 % of the length of the corner welds 112.

The vertical position of the support welds 132 may preferably be such that the support welds are arranged at a distance from the base 104 of the bag, in an upright deployed state, of between 10 % and 90 %, preferably between 20 % and 80 %, more preferably between 30 % and 70 % of the predetermined fill level 108 of the bag.

The horizontal position of the support welds 132 may preferably be such that the support welds reduce the circumference of the bag at half the predetermined fill level of the bag 108, by 1-20 %, preferably by 3-15 %, more preferably by 5-10 %.

In the present invention plastic welding is used to connect one plastic film surface to another. It is understood that similar structures could also be obtained using other plastic joining techniques, such as solvent bonding or the use of adhesives.

Plastic welding is a conventional technique. Welding may for example be effected by electrically heated jaws provided with Teflon release tape to prevent melted material from sticking, the jaws closing on the areas to be welded. Plastic materials suitable for welding, as well as welding parameters suitable for welding various plastic materials are well known and readily available to persons skilled in the art. The strength of a plastic weld is typically dependent of the three welding parameters temperature, pressure and time. By varying these parameters within certain limits, the strength of a weld between two plastic materials can be made stronger or weaker. In the present disclosure, the term "strong weld" is used to denote a weld which is stronger than the joined materials. This means that when the materials are subjected to a peel test, the bonded materials will yield before the weld will yield. The term "weak weld" is used to denote a weld which is weaker than the joined materials. This means that when the materials are subjected to a peel test, the weld will yield before the bonded materials will yield. Breaking of a strong weld between two plastic films will thus result in rupture or tearing of the plastic film, whereas breaking of a weak weld between two plastic films will result in de-lamination of the films without rupture or tearing. By experience welds often are ruptured by a notch effect, i.e. the material right next to the weld is weaker, and gives like a notch rupture when subjected to a sudden mechanical load, especially when the weld is in the weakest direction of the film (Machine Direction in a blown film).

In some embodiments, the support welds 132 comprise a significantly weaker bond than the corner welds 112. The support welds may preferably be configured to break without puncturing the side walls of the bag.

Typically, all welds in the welded plastic bags described herein will be at least 3 mm in width.

The welded plastic container bags described herein are typically made of thicker and more rigid plastic film than that typically used in plastic bags or sacks. The plastic film should preferably have sufficient stiffness to allow the bag to stand on its own in an upright deployed state when the top portion is counter-folded downwards from the predetermined fill level of the bag. To achieve this, the bag may be made of a plastic film comprising a significant portion of a relatively stiff thermoplastic polymer, such as HDPE with a density in the range of from 940 to 960 kg/m³ or a PP homopolymer. The plastic film may be a single layer film (mono) or coextruded film (coex) or laminate comprising two or more layers. Preferably, the plastic film is an HDPE based mono or coex film. The plastic film may for example be a three layer coextruded film with a core layer of HDPE, or HDPE and a bimodal molecular weight distribution type MDPE, with a density in the range of from 940 to 960 kg/m³ for stiffness and outer layers of mLLDPE with a density in the range of from 915 to 930 kg/m³ for improved weldability. The plastic film may typically have a thickness in the range of 100-300 µm, preferably 120-250 µm, more preferably 140-200 µm.

The welded plastic container bags described herein may further be provided with handling means, e.g. handles or the like, for aiding handling of the bag in an empty or filled state. The bag may for example be provided with handles arranged in suitable positions of the side walls, top portion or corners of the bag.

In one preferred embodiment, the handling means may be provided in the form of one or more gripping holes 134 in each corner section 130 of the bag 100. The gripping holes may typically be in the range of 20 - 40 mm in diameter. The corner sections are an especially suitable position for the gripping holes because they can be perforated without puncturing the walls of the bag, and additionally because they provide stronger material since they inherently comprise a double layer of plastic film. Gripping holes may preferably be provided at an upper portion of the corner sections to minimize the effect of the holes on the stiffness provided by the corner sections, allowing the bag to stand on its own in an upright deployed state.

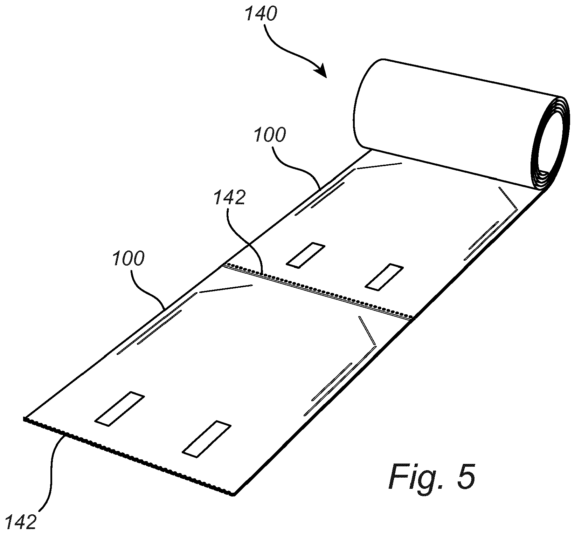

Welded plastic container bags according to embodiments of the present invention may be produced in high volumes at low cost in a continuous and automated production process. Conventional manufacturing methods used in the production of, e.g., plastic bags may be used. Tubular, gusset folded plastic film useful as a starting material can be manufactured by common hot melt extrusion and film-blowing processes. The film is extruded as a continuous tube, gusseted and winded on a roll. Alternatively, a film can be formed by cast film extrusion followed by forming a tube, gusseting and winding on a roll of the cast film. The roll is typically post-treated by welding, perforation, optionally printing and mounted with labels, to form the final product as a bag. Corner welds and support welds as used in the present invention may be implemented using standard techniques well-known in the prior art. As shown in Figure 5, the bags can preferably be winded and provided on rolls 140, where a perforation seam 142 allows for separating the individual bags at the point of use.

While the invention has been described with reference to various exemplary embodiments, it will be understood by those skilled in the art that various changes may be made and equivalents may be substituted for elements thereof without departing from the scope of the invention, which is defined by the appended claims. In addition, many modifications may be made to adapt a particular situation or material to the teachings of the invention without departing from the scope thereof. Therefore, it is intended that the invention not be limited to the particular embodiment disclosed as the best mode contemplated for carrying out this invention, but that the invention will include all embodiments falling within the scope of the appended claims.

## Claims

1. Welded plastic container bag (100) for collection and transport of goods,
wherein said bag in an upright deployed state has a substantially quadrangular horizontal cross section with a substantially quadrangular base (104) and four side walls (106), wherein said substantially quadrangular base and four side walls are formed out of a gusset folded tube of plastic film having two opposing gusset folds, each gusset fold comprising two outer fold lines and one inner fold line,
wherein adjacent side walls are connected by a corner weld (112) extending in a direction substantially perpendicular to the base, from the corners of the base substantially up to a predetermined fill level (108) of the bag,
wherein the corner welds (112) extend substantially from the corners of the quadrangular base substantially up to the predetermined fill level (108) of the bag, and wherein each corner weld comprises a weld line, which together with the adjacent gusset fold forms a tubular corner section (130),
said bag being **characterised in that**
said bag in an upright deployed state defines an internal volume in the range of 0.1-3 m³ up to the predetermined fill level, and **in that** said side walls extend substantially above the predetermined fill level of the bag to form top portion (110) useful for closing the bag, and wherein the plastic film has sufficient stiffness to allow the bag to stand on its own in an upright deployed state when the top portion is counter-folded downwards from the predetermined fill level of the bag.

2. Welded plastic container bag according to claim 1, wherein the top of the bag is substantially flat when closed using the top portion.

3. Welded plastic container bag according to any one of claims 1-2, wherein the bag can be made substantially air tight when closed using the top portion.

4. Welded plastic container bag according to any one of the preceding claims, wherein adjacent side walls are further connected by a support weld (132) arranged between the base and a predetermined fill level of the bag, creating a narrowed substantially quadrangular horizontal cross section between the base and a predetermined fill level of the bag.

5. Welded plastic container bag according to claim 4, wherein the support welds comprise a significantly weaker bond than the corner welds.

6. Welded plastic container bag according to any one of the preceding claims, wherein the corner sections of the bag are provided with gripping holes (134).

7. A roll (140) of welded plastic container bags, comprising a plurality of welded plastic container bags according to any one of the preceding claims, each bag connected to the next bag in the roll by a perforation line (142).

8. Use of a welded plastic container bag according to any one of claims 1-6 for collection and transport of bulk products, preferably for collection and transport of recyclable goods, more preferably for collection and transport of empty cans and bottles.

9. A process for manufacturing a welded plastic container bag according to any of claims 1-6, wherein said bag in an upright deployed state has a substantially quadrangular horizontal cross section with a substantially quadrangular base and four side walls, comprising the steps:
a) providing a gusset folded tube of plastic film having two opposing gusset folds, each gusset fold comprising two outer fold lines and one inner fold line, wherein the front and back side of the gusset folded tube form two opposing side walls of the bag and the two opposing gusset folds form the remaining two opposing side walls;
b) forming a bottom weld line sealing one end of said tube, and forming oblique weld lines to provide a base with a substantially quadrangular shape;
c) forming a corner weld adjacent and substantially parallel to each outer gusset fold line, each corner weld connecting two adjacent side walls from the base substantially up to a predetermined fill level of the bag, wherein the corner welds (112) extend substantially from the corners of the quadrangular base substantially up to the predetermined fill level (108) of the bag and wherein each corner weld comprises a weld line, which together with the adjacent gusset fold forms a tubular corner section of said bag,
and wherein said bag in an upright deployed state defines an internal volume in the range of 0.1-3 m³ up to the predetermined fill level, and wherein said side walls extend substantially above the predetermined fill level of the bag to form top portion (110) useful for closing the bag, and wherein the plastic film has sufficient stiffness to allow the bag to stand on its own in an upright deployed state when the top portion is counter-folded downwards from the predetermined fill level of the bag.

10. A process according to claim 9, further comprising the step:
d) forming support welds on the inside of and substantially parallel to each corner weld, each support weld connecting two adjacent side walls at a distance from the base of the bag, in an upright deployed state, of between 10 % and 90 %, preferably between 20 % and 80 %, more preferably between 30 % and 70 % of the predetermined fill level of the bag, said support welds creating a narrowed substantially quadrangular horizontal cross section between the base and a predetermined fill level of the bag.

## Patentansprüche

1. Geschweißter Kunststoffbehälterbeutel (100) zum Sammeln und Transportieren von Gütern,
wobei der Beutel in einem aufrechten entfalteten Zustand einen im Wesentlichen viereckigen horizontalen Querschnitt mit einer im Wesentlichen viereckigen Basis (104) und vier Seitenwänden (106) aufweist, wobei
die im Wesentlichen viereckigen Basis und die vier Seitenwände aus einem Seitenfaltenschlauch aus Kunststofffolie mit zwei gegenüberliegenden Seitenfalten gebildet sind, wobei jede Seitenfalte zwei äußere Faltlinien und eine innere Faltlinie aufweist,
wobei benachbarte Seitenwände durch eine Ecknaht (112) verbunden sind, die sich in einer Richtung im Wesentlichen senkrecht zu der Basis, von den Ecken der Basis im Wesentlichen bis zu einem vorbestimmten Füllstand (108) des Beutels erstreckt,
wobei sich die Ecknähte (112) im Wesentlichen von den Ecken der viereckigen Basis im Wesentlichen bis zu dem vorbestimmten Füllstand (108) des Beutels erstrecken, und wobei jede Ecknaht eine Nahtlinie umfasst, die zusammen mit der angrenzenden Seitenfalte einen rohrförmigen Eckabschnitt (130) bildet,
wobei der Beutel **dadurch gekennzeichnet ist, dass** der Beutel in einem aufrechten entfalteten Zustand ein Innenvolumen in dem Bereich von 0,1-3 m³ bis zu dem vorbestimmten Füllstand definiert, und dass sich die Seitenwände im Wesentlichen über den vorbestimmten Füllstand des Beutels erstrecken, um einen oberen Abschnitt (110) auszubilden, der zum Verschließen des Beutels verwendbar ist, und wobei die Kunststofffolie eine ausreichende Steifigkeit aufweist, damit der Beutel selbständig in einem aufrechten entfalteten Zustand stehen kann, wenn der obere Abschnitt von dem vorbestimmten Füllstand des Beutels nach unten gegengefaltet ist.

2. Geschweißter Kunststoffbehälterbeutel nach Anspruch 1, wobei die Oberseite des Beutels im Wesentlichen flach ist, wenn er mithilfe des oberen Abschnitts verschlossen ist.

3. Geschweißter Kunststoffbehälterbeutel nach einem der Ansprüche 1-2, wobei der Beutel im Wesentlichen luftdicht gemacht werden kann, wenn er mithilfe des oberen Abschnitts verschlossen ist.

4. Geschweißter Kunststoffbehälterbeutel nach einem der vorhergehenden Ansprüche, wobei benachbarte Seitenwände ferner durch eine Stütznaht (132) verbunden sind, die zwischen der Basis und einem vorbestimmten Füllstand des Beutels angeordnet ist, die einen schmäleren im Wesentlichen viereckigen horizontalen Querschnitt zwischen der Basis und einem vorbestimmten Füllstand des Beutels erzeugt.

5. Geschweißter Kunststoffbehälterbeutel nach Anspruch 4, wobei die Stütznähte eine deutlich schwächere Verbindung als die Ecknähte umfassen.

6. Geschweißter Kunststoffbehälterbeutel nach einem der vorhergehenden Ansprüche, wobei die Eckabschnitte des Beutels mit Grifflöchern (134) versehen sind.

7. Rolle (140) von geschweißten Kunststoffbehälterbeuteln, umfassend mehrere geschweißte Kunststoffbehälterbeutel nach einem der vorhergehenden Ansprüche, wobei jeder Beutel mit dem nächsten Beutel in der Rolle durch eine perforierte Linie (142) verbunden ist.

8. Verwendung eines geschweißten Kunststoffbehälterbeutels nach einem der Ansprüche 1-6 zum Sammeln und Transportieren von losen Produkten, vorzugsweise zum Sammeln und Transportieren von wiederverwertbaren Gütern, weiter bevorzugt zum Sammeln und Transportieren von leeren Dosen und Flaschen.

9. Verfahren zum Herstellen eines geschweißten Kunststoffbehälterbeutels nach einem der Ansprüche 1-6, wobei der Beutel in einem aufrechten entfalteten Zustand einen im Wesentlichen viereckigen horizontalen Querschnitt mit einer im Wesentlichen viereckigen Basis und vier Seitenwänden aufweist, umfassend die folgenden Schritte:
a) Bereitstellen eines Seitenfaltenschlauchs aus Kunststofffolie mit zwei gegenüberliegenden Seitenfalten, wobei jede Seitenfalte zwei äußere Faltlinien und eine innere Faltlinie aufweist, wobei die vordere und hintere Seite des Seitenfaltenschlauchs zwei gegenüberliegende Seitenwände des Beutels bilden und die zwei gegenüberliegenden Seitenfalten die restlichen zwei gegenüberliegenden Seitenwände bilden;
b) Ausbilden einer unteren Schweißlinie, die ein Ende des Schlauchs versiegelt, und Ausbilden von schrägen Schweißlinien, um eine Basis mit einer im Wesentlichen viereckigen Form bereitzustellen;
c) Ausbilden einer Ecknaht angrenzend und im Wesentlichen parallel zu jeder äußeren Seitenfaltenlinie, wobei jede Ecknaht zwei benachbarte Seitenwände von der Basis im Wesentlichen bis zu einem vorbestimmten Füllstand des Beutels verbindet, wobei sich die Ecknähte (112) im Wesentlichen von den Ecken der viereckigen Basis im Wesentlichen bis zu dem vorbestimmten Füllstand (108) des Beutels erstrecken und wobei jede Ecknaht eine Nahtlinie umfasst, die zusammen mit der angrenzenden Seitenfalte einen rohrförmigen Eckabschnitt des Beutels bildet,
und wobei der Beutel in einem aufrechten entfalteten Zustand ein Innenvolumen in dem Bereich von 0,1-3 m³ bis zu dem vorbestimmten Füllstand definiert, und wobei sich die Seitenwände im Wesentlichen über den vorbestimmten Füllstand des Beutels erstrecken, um einen oberen Abschnitt (110) auszubilden, der zum Verschließen des Beutels verwendbar ist, und wobei die Kunststofffolie eine ausreichende Steifigkeit aufweist, damit der Beutel selbständig in einem aufrechten entfalteten Zustand stehen kann, wenn der obere Abschnitt von dem vorbestimmten Füllstand des Beutels nach unten gegengefaltet ist.

10. Verfahren nach Anspruch 9, ferner umfassend den folgenden Schritt:
d) Ausbilden von Stütznähten im Inneren von und im Wesentlichen parallel zu jeder Ecknaht, wobei jede Stütznaht zwei benachbarte Seitenwände in einem Abstand von der Basis des Beutels, in einem aufrechten entfalteten Zustand, von zwischen 10 % und 90 %, vorzugsweise zwischen 20 % und 80 %, weiter bevorzugt zwischen 30 % und 70 % des vorbestimmten Füllstand des Beutels verbindet, wobei die Stütznähte einen schmäleren im Wesentlichen viereckigen horizontalen Querschnitt zwischen der Basis und einem vorbestimmten Füllstand des Beutels erzeugen.

## Revendications

1. Sac contenant en plastique soudé (100) pour la collecte et le transport de marchandises,
ledit sac dans un état déployé vertical ayant une section transversale horizontale sensiblement quadrangulaire avec une base sensiblement quadrangulaire (104) et quatre parois latérales (106),
ladite base sensiblement quadrangulaire et lesdites quatre parois latérales étant formées à partir d'un tube plié en soufflet de film plastique ayant deux plis de soufflet opposés, chaque pli de soufflet comprenant deux lignes de pli extérieures et une ligne de pli intérieure,
des parois latérales adjacentes étant reliées par une soudure d'angle (112) s'étendant dans une direction sensiblement perpendiculaire à la base, depuis les coins de la base sensiblement jusqu'à un niveau de remplissage prédéfini (108) du sac,
les soudures d'angle (112) s'étendant sensiblement depuis les coins de la base quadrangulaire sensiblement jusqu'au niveau de remplissage prédéfini (108) du sac, et chaque soudure d'angle comprenant une ligne de soudure qui, avec le pli de soufflet adjacent, forme une section d'angle tubulaire (130),
ledit sac étant **caractérisé en ce que**
ledit sac dans un état déployé vertical définit un volume interne dans la plage comprise entre 0,1 et 3 m³ jusqu'au niveau de remplissage prédéfini, et **en ce que**
lesdites parois latérales s'étendent sensiblement au-dessus du niveau de remplissage prédéfini du sac pour former une partie supérieure (110) utile pour fermer le sac, et
le film plastique ayant une rigidité suffisante pour permettre au sac de se tenir seul dans un état déployé vertical lorsque la partie supérieure est repliée vers le bas à partir du niveau de remplissage prédéfini du sac.

2. Sac contenant en plastique soudé selon la revendication 1, la partie supérieure du sac étant sensiblement plate lorsqu'il est fermé en utilisant la partie supérieure.

3. Sac contenant en plastique soudé selon la revendication 1 ou 2, le sac pouvant être rendu sensiblement étanche à l'air lorsqu'il est fermé en utilisant la partie supérieure.

4. Sac contenant en plastique soudé selon l'une quelconque des revendications précédentes, des parois latérales adjacentes étant en outre reliées par une soudure de support (132) disposée entre la base et un niveau de remplissage prédéfini du sac, créant une section transversale horizontale sensiblement quadrangulaire rétrécie entre la base et un niveau de remplissage prédéfini du sac.

5. Sac contenant en plastique soudé selon la revendication 4, les soudures de support comprenant une liaison nettement plus faible que les soudures d'angle.

6. Sac contenant en plastique soudé selon l'une quelconque des revendications précédentes, les sections d'angle du sac étant munies de trous de préhension (134).

7. Rouleau (140) de sacs contenants en plastique soudés, comprenant une pluralité de sacs contenants en plastique soudés selon l'une quelconque des revendications précédentes, chaque sac étant relié au sac suivant du rouleau par une ligne de perforation (142).

8. Utilisation d'un sac contenant en plastique soudé selon l'une quelconque des revendications 1 à 6 pour la collecte et le transport de produits en vrac, de préférence pour la collecte et le transport de marchandises recyclables, de préférence encore pour la collecte et le transport de canettes et bouteilles vides.

9. Procédé de fabrication d'un sac contenant en plastique soudé selon l'une quelconque des revendications 1 à 6,
ledit sac à l'état déployé vertical ayant une section transversale horizontale sensiblement quadrangulaire avec une base sensiblement quadrangulaire et quatre parois latérales, comprenant les étapes consistant à :
a) fournir un tube plié à soufflet de film plastique ayant deux plis de soufflet opposés, chaque pli de soufflet comprenant deux lignes de pliage extérieures et une ligne de pliage intérieure, les côtés avant et arrière du tube plié à soufflet formant deux parois latérales opposées du sac et les deux plis de soufflet opposés formant les deux autres parois latérales opposées ;
b) former une ligne de soudure inférieure scellant une extrémité dudit tube, et former des lignes de soudure obliques pour fournir une base avec une forme sensiblement quadrangulaire ;
c) former une soudure d'angle adjacente et sensiblement parallèle à chaque ligne de pliage de soufflet extérieure, chaque soudure d'angle reliant deux parois latérales adjacentes de la base sensiblement jusqu'à un niveau de remplissage prédéfini du sac, les soudures d'angle (112) s'étendant sensiblement des coins de la base quadrangulaire sensiblement jusqu'au niveau de remplissage prédéfini (108) du sac et chaque soudure d'angle comprenant une ligne de soudure qui forme, avec le pli de soufflet adjacent, une section d'angle tubulaire dudit sac,
et ledit sac dans un état déployé vertical définissant un volume interne dans la plage de 0,1 à 3 m³ jusqu'au niveau de remplissage prédéfini, et
lesdites parois latérales s'étendant sensiblement au-dessus du niveau de remplissage prédéfini du sac pour former une partie supérieure (110) utile pour fermer le sac, et
le film plastique ayant une rigidité suffisante pour permettre au sac de se tenir seul dans un état déployé vertical lorsque la partie supérieure est repliée vers le bas à partir du niveau de remplissage prédéfini du sac.

10. Procédé selon la revendication 9, comprenant en outre l'étape consistant à :
d) former des soudures de support à l'intérieur et sensiblement parallèles à chaque soudure d'angle, chaque soudure de support reliant deux parois latérales adjacentes à une distance de la base du sac, à l'état déployé vertical, comprise entre 10 % et 90 %, de préférence entre 20 % et 80 %, encore de préférence entre 30 % et 70 % du niveau de remplissage prédéfini du sac, lesdites soudures de support créant une section transversale horizontale sensiblement quadrangulaire rétrécie entre la base et un niveau de remplissage prédéfini du sac.
